(19) 

Europäisches
Patentamt
European
Patent Office
Office européen
des brevets

(11) **EP 4 753 159 A1**

(12) **EUROPEAN PATENT APPLICATION**
published in accordance with Art. 153(4) EPC

(43) Date of publication:
**03.06.2026 Bulletin 2026/23**

(21) Application number: **23946249.2**

(22) Date of filing: **27.07.2023**

(51) International Patent Classification (IPC):
**H04B 1/69** *(2011.01)*

(52) Cooperative Patent Classification (CPC):
**H04B 1/69**

(86) International application number:
**PCT/CN2023/109495**

(87) International publication number:
**WO 2025/020162 (30.01.2025 Gazette 2025/05)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **GUANGDONG OPPO MOBILE
TELECOMMUNICATIONS
CORP., LTD.
Dongguan, Guangdong 523860 (CN)**

(72) Inventors:
• **LIN, Yanan**
  **Dongguan, Guangdong 523860 (CN)**
• **XU, Jing**
  **Dongguan, Guangdong 523860 (CN)**

(74) Representative: **Taor, Simon Edward William et al
Venner Shipley LLP
TIDE Bankside
8 Emerson Street
London SE1 9DU (GB)**

(54) **SENSING RESULT ACQUISITION METHOD AND APPARATUS, DEVICE, AND STORAGE MEDIUM**

(57) A sensing result acquisition method and apparatus, a device, and a storage medium, relating to the technical field of communications. The method comprises: receiving a first channel, wherein data subjected to spread spectrum processing by means of a first sequence is mapped to the first channel (410); and acquiring a sensing result by means of the first channel (420). By spreading the data and mapping the data to the first channel for transmission, the code domain resources occupied by the first channel are increased by means of the spread spectrum sequence, and it is equivalent to multiplexing multiple users on the same time-frequency domain resource, thereby avoiding occupying a large amount of physical resources, satisfying the requirements of large bandwidth and long time for sensing, and avoiding the waste of time-frequency domain resources.

410
Receive, by a first device, a first channel, data subjected to spreading processing by using a first sequence is mapped to the first channel

420
Acquire, by the first device, a sensing result based on the first channel

**FIG. 4**

**Description**

TECHNICAL FIELD

Embodiments of the present disclosure relate to the technical field of communications, and in particular, to a sensing result acquisition method and apparatus, a device, and a storage medium.

BACKGROUND

Wireless communication and sensing are two important applications of modern radio-frequency technology. Sensing uses radio waves to detect parameters of a physical environment, to implement environment sensing such as target positioning, action recognition, and imaging. Integrated sensing and communication technology integrates the two functions of wireless communication and sensing, and uses the same signal to complete the communication function and sensing function at the same time, thereby improving spectrum utilization.

Sensing precision is usually affected by signal bandwidth and signal duration. For example, the larger the signal bandwidth, the higher the sensing precision of ranging, and the longer the signal duration, the higher the sensing precision of speed measurement. If a sensing signal is scheduled to occupy more time-frequency-domain resources for transmission to satisfy the sensing requirements, the system transmission efficiency will be reduced.

SUMMARY

Embodiments of the present disclosure provide a sensing result acquisition method and apparatus, a device, and a storage medium. The technical solutions are provided as follows.

According to an aspect of an embodiment of the present disclosure, a sensing result acquisition method is provided. The method is executed by a first device. The method includes the following operations.

A first channel is received. Data subjected to spreading processing by using a first sequence is mapped to the first channel.

A sensing result is acquired based on the first channel.

According to an aspect of an embodiment of the present disclosure, a sensing result acquisition method is provided. The method is executed by a second device. The method includes the following operations.

A first channel is sent. Data subjected to spreading processing by using a first sequence is mapped to the first information. The first channel is configured to acquire a sensing result.

According to an aspect of an embodiment of the present disclosure, a sensing result acquisition apparatus is provided. The apparatus is disposed in a first device. The apparatus includes a transceiver module and a processing module.

The transceiver module is configured to receive a first channel. Data subjected to spreading processing by using a first sequence is mapped to the first channel.

The processing module is configured to acquire a sensing result based on the first channel.

According to an aspect of an embodiment of the present disclosure, a sensing result acquisition apparatus is provided. The apparatus is disposed in a second device. The apparatus includes a transceiver module.

The transceiver module is configured to send a first channel. Data subjected to spreading processing by using a first sequence is mapped to the first information. The first channel is configured to acquire a sensing result.

According to an aspect of an embodiment of the present disclosure, a communication device is provided. The communication device includes a processor and a memory, the memory has a computer program stored therein, and the processor executes the computer program to implement the foregoing sensing result acquisition method. In some embodiments, the communication device is a first device, or the communication device is a second device.

According to an aspect of an embodiment of the present disclosure, a computer-readable storage medium is provided. The storage medium has a computer program stored thereon, and the computer program is configured to be executed by a processor to implement the foregoing sensing result acquisition method.

According to an aspect of an embodiment of the present disclosure, a chip is provided. The chip includes a programmable logic circuit and/or program instructions. When the chip runs, the chip is configured to implement the foregoing sensing result acquisition method.

According to an aspect of an embodiment of the present disclosure, a computer program product is provided. The computer program product includes a computer program, the computer program is stored in a computer-readable storage medium, and is read and executed by a processor from the computer-readable storage medium to implement the foregoing sensing result acquisition method.

The technical solutions provided in the embodiments of the present disclosure may include the beneficial effects as follows.

The data is spread and mapped to the first channel for transmission, the spreading sequence increases the code-domain resource occupied by the first channel, which is equivalent to multiplexing multiple users on the same time-frequency-domain resource, avoiding the occupation of large amounts of physical resources while still meeting the sensing requirements for large bandwidth and long duration, thus avoiding the waste of time-frequency-domain resources.

BRIEF DESCRIPTION OF THE DRAWINGS

FIG. 1 is a schematic diagram of a network architecture provided by an embodiment of the present disclosure.
FIG. 2 is a schematic diagram of a demodulation reference symbol (DMRS) pattern of physical downlink shared channel (PDSCH) DMRS configuration type 1 provided by an embodiment of the present disclosure.
FIG. 3 is a schematic diagram of a DMRS pattern of PDSCH DMRS configuration type 2 provided by an embodiment of the present disclosure.
FIG. 4 is a flowchart of a sensing result acquisition method provided by an embodiment of the present disclosure.
FIG. 5 is a block diagram of a sensing result acquisition apparatus provided by an embodiment of the present disclosure.
FIG. 6 is a block diagram of a sensing result acquisition apparatus provided by another embodiment of the present disclosure.
FIG. 7 is a schematic structural diagram of a communication device provided by an embodiment of the present disclosure.

DETAILED DESCRIPTION

In order to make the purpose, technical solutions, and advantages of the present disclosure clearer, the embodiments of the present disclosure will be further described in detail below with reference to the accompanying drawings.

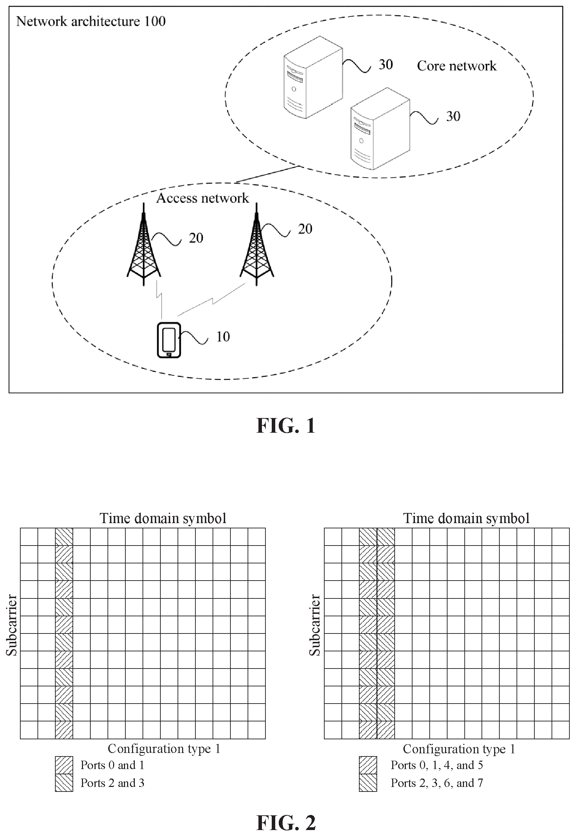

With reference to FIG. 1, a schematic diagram of a network architecture 100 provided by an embodiment of the present disclosure is illustrated. The network architecture 100 may include: a terminal device 10, access network devices 20, and core-network network elements 30.

The terminal device 10 may refer to user equipment (UE), an access terminal, a user unit, a user station, a mobile station, a mobile site, a remote station, a remote terminal, a mobile device, a wireless communication device, a user agent, or a user apparatus. In some embodiments, the terminal device 10 may alternatively be a cellular phone, a cordless phone, a session initiation protocol (SIP) phone, a wireless local loop (WLL) station, a personal digital assistant (PDA), a handheld device with a wireless communication function, a computing device or another processing device connected to a wireless modem, a vehicle-mounted device, a wearable device, a terminal device in a 5th generation system (5GS) or a terminal device in a future evolved public land mobile network (PLMN), and the like. This is not limited in embodiments of the present disclosure. For ease of description, the devices mentioned above are collectively referred to as terminal devices. There are usually multiple terminal devices 10, and one or multiple terminal devices 10 may be distributed in a cell managed by each access network device 20. The terminal device may also be referred to as a terminal or UE for short, and a person skilled in the art may understand the meaning thereof.

Each access network device 20 may be a device deployed in an access network to provide wireless communication functions for the terminal device 10. The access network device 20 may include various forms of macro base stations, micro base stations, relay stations, access points, etc. In systems using different radio access technologies, the names of devices with access network device functions may be different. For example, the same is referred to as a gNodeB or a gNB in a 5th generation (5G) new radio (NR) system. As communication technology evolves, the name "access network device" may change. For ease of description, in the embodiments of the present disclosure, the aforementioned apparatuses for providing wireless communication functions for the terminal device 10 are collectively referred to as access network devices. In some embodiments, a communication relationship may be established between the terminal device 10 and a core-network network element 30 by using the access network device 20. For example, in a long term evolution (LTE) system, the access network device 20 may be an evolved universal terrestrial radio access network (EUTRAN) or one or multiple eNodeBs in the EUTRAN. In the 5G NR system, the access network device 20 may be a radio access network (RAN) or one or multiple gNBs in the RAN. In the embodiments of the present disclosure, the "network device" refers to the access network device 20, for example, a base station, unless otherwise specified.

Each core-network network element 30 is a network element deployed in a core network, and the function of the core-network network element 30 is mainly to provide a user connection, manage a user, and complete a bearer for a service, and the core-network network element is used as a bearer network to provide an interface to an external network.

For example, the core-network network element in the 5G NR system may include network elements such as an access and mobility management function (AMF) entity, a user plane function (UPF) entity, and a session management function (SMF) entity.

In some embodiments, the access network device 20 and the core-network network element 30 communicate with each other by means of a certain air interface technology, for example, an NG interface in the 5G NR system. The access network device 20 and the terminal device 10 communicate with each other by means of a certain air interface technology, for example, a Uu interface.

In the embodiments of the present disclosure, the "5G NR system" may also be referred to as a 5G system or an NR system, but a person skilled in the art may understand the meaning thereof. The technical solutions described in the embodiments of the present disclosure are applicable to the LTE system, the 5G NR system, an evolved system subsequent to the 5G NR system (for example, a beyond 5G (B5G) system or a 6G system (6th Generation System, 6th generation mobile communication system)), or another communication system such as a narrow band Internet of Things (NB-IoT) system, which is not limited in the present disclosure.

In the embodiments of the present disclosure, the network device may serve a cell, and the terminal device communicates with the network device by means of a transmission resource (for example, a frequency-domain resource or a spectrum resource) on a carrier used by the cell. The cell may be a cell corresponding to the network device (for example, a base station). The cell may belong to a macro base station or a base station corresponding to a small cell. The small cell herein may include: a metro cell, a micro cell, a pico cell, a femto cell, etc. These small cells have the characteristics of small coverage and low transmit power, and are suitable for providing high-rate data transmission services.

Before the technical solutions of the present disclosure are described, the related art of the present disclosure will be described. The following related techniques can be arbitrarily combined with the technical solution of the embodiments of the present disclosure as optional solutions, all of which fall within the scope of protection of the embodiments of the present disclosure. The embodiments of the present disclosure include at least some of the following content.

1. Integrated sensing and communication

Wireless communication and sensing are two important applications of modern radio-frequency technology. Sensing uses radio waves to detect parameters of a physical environment, to implement environment sensing such as target positioning, action recognition, and imaging. Conventional sensing and wireless communication exist independently, and the waste of the wireless spectrum and hardware resources is present in the separated design. In the B5G and 6G era, the communication spectrum has moved to millimeter wave, terahertz, and visible light communication, and, in the future, the spectrum of wireless communication will overlap with the conventional sensing spectrum. Integrated sensing and communication technology integrates the two functions of wireless communication and sensing, and uses the same signal to complete the communication and sensing functions at the same time, thereby improving spectrum utilization. Secondly, wireless communication and wireless sensing also have more and more similarities in terms of system design, signal processing, data processing, and the like. Therefore, using the same device to implement the communication and sensing functions is beneficial to reducing device costs.

Integrated sensing and communication may be roughly classified into two main categories: communication-assisted sensing and sensing-assisted communication. Communication-assisted sensing refers to delivering and converging sensing information by means of wireless communication, which can expand the breadth and depth of sensing services and improve the timeliness of sensing services. Based on communication and sensing fusion technology, efficient sensing services such as high-precision positioning, high-resolution imaging, and virtual environment reconstruction may be provided, and a digital twin environment can be effectively constructed, enabling the digital re-presentation and in-depth processing of thousands of industries.

2. NR PDSCH/physical uplink shared channel (PUSCH) DMRS

2.1 Time-domain position

PDSCH mapping type A: A front-loaded DMRS is transmitted on the 2nd or 3rd symbol in a slot.

PDSCH mapping type B: A front-loaded DMRS is transmitted on the 1st time-domain symbol occupied by a PDSCH.

PUSCH mapping type A: The position of a front-loaded DMRS is configured by higher layer signaling.

PUSCH mapping type B: A front-loaded DMRS is transmitted on the 1st time-domain symbol occupied by a PUSCH.

2.2 Additional DMRS

In a high-speed scenario, a base station may configure more DMRSs in the time-domain to meet an estimation precision requirement for signal time variability. The number and positions of the additional DMRSs are related to the number of symbols occupied by a PDSCH/PUSCH. Table 1 and Table 2 illustrate time-domain positions of the DMRSs in the case of a single-symbol, where $l_0$ is a front-loaded DMRS.

Table 1: PDSCH DM-RS position $\bar{l}$ for a single-symbol FM-RS

| $l_d$ in symbols (number of time-domain symbols occupied by a PDSCH) | DM-RS positions $\bar{l}$ | | | | | | | |
| --- | --- | --- | --- | --- | --- | --- | --- | --- |
| | PDSCH mapping type A | | | | PDSCH mapping type B | | | |
| | Additional DMRS position | | | | Additional DMRS position | | | |
| | Position 0 | Position 1 | Position 2 | Position 3 | Position 0 | Position 1 | Position 2 | Position 3 |
| 2 | - | - | - | - | $l_0$ | $l_0$ | $l_0$ | $l_0$ |
| 3 | $l_0$ | $l_0$ | $l_0$ | $l_0$ | $l_0$ | $l_0$ | $l_0$ | $l_0$ |
| 4 | $l_0$ | $l_0$ | $l_0$ | $l_0$ | $l_0$ | $l_0$ | $l_0$ | $l_0$ |
| 5 | $l_0$ | $l_0$ | $l_0$ | $l_0$ | $l_0$ | $l_0, 4$ | $l_0, 4$ | $l_0, 4$ |
| 6 | $l_0$ | $l_0$ | $l_0$ | $l_0$ | $l_0$ | $l_0, 4$ | $l_0, 4$ | $l_0, 4$ |
| 7 | $l_0$ | $l_0$ | $l_0$ | $l_0$ | $l_0$ | $l_0, 4$ | $l_0, 4$ | $l_0, 4$ |
| 8 | $l_0$ | $l_0, 7$ | $l_0, 7$ | $l_0, 7$ | $l_0$ | $l_0, 6$ | $l_0, 3, 6$ | $l_0, 3, 6$ |
| 9 | $l_0$ | $l_0, 7$ | $l_0, 7$ | $l_0, 7$ | $l_0$ | $l_0, 7$ | $l_0, 4, 7$ | $l_0, 4, 7$ |
| 10 | $l_0$ | $l_0, 9$ | $l_0, 6, 9$ | $l_0, 6, 9$ | $l_0$ | $l_0, 7$ | $l_0, 4, 7$ | $l_0, 4, 7$ |
| 11 | $l_0$ | $l_0, 9$ | $l_0, 6, 9$ | $l_0, 6, 9$ | $l_0$ | $l_0, 8$ | $l_0, 4, 8$ | $l_0, 3, 6, 9$ |
| 12 | $l_0$ | $l_0, 9$ | $l_0, 6, 9$ | $l_0, 5, 8, 11$ | $l_0$ | $l_0, 9$ | $l_0, 5, 9$ | $l_0, 3, 6, 9$ |
| 13 | $l_0$ | $l_0, l_1$ | $l_0, 7, 11$ | $l_0, 5, 8, 11$ | $l_0$ | $l_0, 9$ | $l_0, 5, 9$ | $l_0, 3, 6, 9$ |
| 14 | $l_0$ | $l_0, l_1$ | $l_0, 7, 11$ | $l_0, 5, 8, 11$ | - | - | - | - |

Table 2: Position $\bar{l}$ of a PUSCH DM-RS within a slot for disabling single-symbol DM-RS and intra-slot frequency hopping

| $l_d$ in symbols (number of time-domain symbols occupied by a PDSCH) | DM-RS positions $\bar{l}$ | | | | | | | |
| --- | --- | --- | --- | --- | --- | --- | --- | --- |
| | PUSCH mapping type A | | | | PUSCH mapping type B | | | |
| | Additional DMRS position | | | | Additional DMRS position | | | |
| | Position 0 | Position 1 | Position 2 | Position 3 | Position 0 | Position 1 | Position 2 | Position 3 |
| <4 | - | - | - | - | $l_0$ | $l_0$ | $l_0$ | $l_0$ |
| 4 | $l_0$ | $l_0$ | $l_0$ | $l_0$ | $l_0$ | $l_0$ | $l_0$ | $l_0$ |
| 5 | $l_0$ | $l_0$ | $l_0$ | $l_0$ | $l_0$ | $l_0, 4$ | $l_0, 4$ | $l_0, 4$ |
| 6 | $l_0$ | $l_0$ | $l_0$ | $l_0$ | $l_0$ | $l_0, 4$ | $l_0, 4$ | $l_0, 4$ |
| 7 | $l_0$ | $l_0$ | $l_0$ | $l_0$ | $l_0$ | $l_0, 4$ | $l_0, 4$ | $l_0, 4$ |
| 8 | $l_0$ | $l_0, 7$ | $l_0, 7$ | $l_0, 7$ | $l_0$ | $l_0, 6$ | $l_0, 3, 6$ | $l_0, 3, 6$ |
| 9 | $l_0$ | $l_0, 7$ | $l_0, 7$ | $l_0, 7$ | $l_0$ | $l_0, 6$ | $l_0, 3, 6$ | $l_0, 3, 6$ |
| 10 | $l_0$ | $l_0, 9$ | $l_0, 6, 9$ | $l_0, 6, 9$ | $l_0$ | $l_0, 8$ | $l_0, 4, 8$ | $l_0, 3, 6, 9$ |
| 11 | $l_0$ | $l_0, 9$ | $l_0, 6, 9$ | $l_0, 6, 9$ | $l_0$ | $l_0, 8$ | $l_0, 4, 8$ | $l_0, 3, 6, 9$ |
| 12 | $l_0$ | $l_0, 9$ | $l_0, 6, 9$ | $l_0, 5, 8, 11$ | $l_0$ | $l_0, 10$ | $l_0, 5, 10$ | $l_0, 3, 6, 9$ |
| 13 | $l_0$ | $l_0, 11$ | $l_0, 7, 11$ | $l_0, 5, 8, 11$ | $l_0$ | $l_0, 10$ | $l_0, 5, 10$ | $l_0, 3, 6, 9$ |

(continued)

| $l_d$ in symbols (number of time-domain symbols occupied by a PDSCH) | DM-RS positions $\bar{l}$ | | | | | | | |
| | PUSCH mapping type A | | | | PUSCH mapping type B | | | |
| | Additional DMRS position | | | | Additional DMRS position | | | |
| | Position 0 | Position 1 | Position 2 | Position 3 | Position 0 | Position 1 | Position 2 | Position 3 |
| 14 | $l_0$ | $l_0$, 11 | $l_0$, 7, 11 | $l_0$, 5, 8, 11 | $l_0$ | $l_0$, 10 | $l_0$, 5, 10 | $l_0$, 3, 6, 9 |

### 2.3 DMRS pattern

The DMRS is transmitted only in a physical resource block occupied by the PDSCH/PUSCH.

PDSCH DMRS configuration type 1: as illustrated in FIG. 2, a front-loaded DMRS of PDSCH mapping type A is used as an example, and resource elements (REs) occupied by a DMRS corresponding to each antenna port are mapped at intervals in the frequency-domain. In the case of a single-symbol, a maximum of four antenna ports may be supported. In the case of double symbols, a maximum of eight antenna ports are supported. In FIG. 2, numerals indicate the serial numbers of the antenna ports.

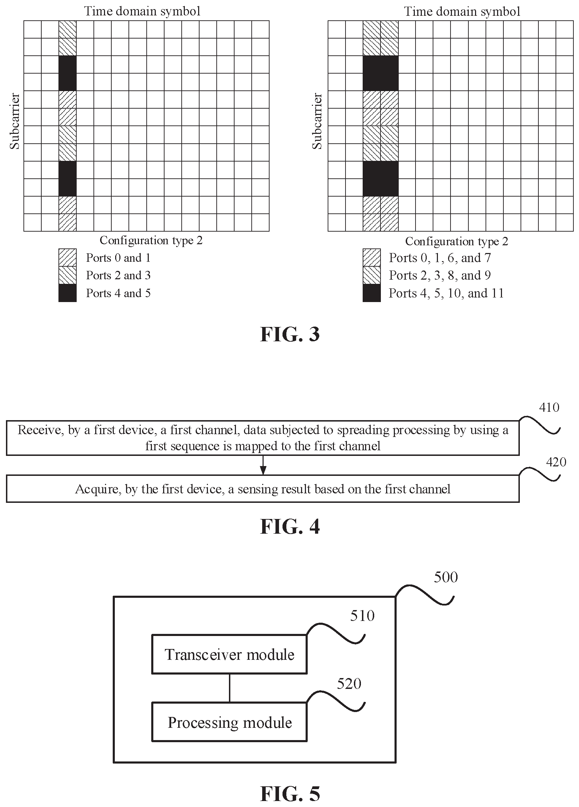

PDSCH DMRS configuration type 2: as illustrated in FIG. 3, a front-loaded DMRS of PDSCH mapping type A is used as an example. In the case of a single-symbol, a maximum of three groups of resources (corresponding to different shading) are supported, and frequency-domain spreading is used on two adjacent REs in each group, thereby supporting multiplexing of two antenna ports. In the case of double symbols, a maximum of 12 antenna ports are supported.

PUSCH DMRS configuration type 1 and PDSCH DMRS configuration type 1 have the same pattern. PUSCH DMRS configuration type 2 and PDSCH DMRS configuration type 2 have the same pattern.

### 2.4 DMRS sequence

A DMRS sequence is generated according to the formula

$$r(n) = \frac{1}{\sqrt{2}}\big(1 - 2 \cdot c(2n)\big) + j\frac{1}{\sqrt{2}}\big(1 - 2 \cdot c(2n + 1)\big)$$

, where c(i) is a pseudo random sequence, n=1, 2, 3, ..., k, k is the length of the DMRS sequence, and $j$ is the imaginary unit.

### 3. NR PDSCH/PUSCH

Based on factors such as the size of the transport block carried in a PDSCH/PUSCH, channel conditions, and a transmission reliability requirement, a base station allocates to a terminal time-frequency resources for transmitting the PDSCH/PUSCH. When the channel conditions are poor and the reliability requirement is high, the base station selects a low modulation and coding scheme (MCS) level (where the lower the MCS level, the lower the code rate), and correspondingly, data of the occupied time-frequency resource is larger. Currently, the NR supports multiple MCS tables (where Table 3 is one of the MCS tables), as shown below.

Table 3: MCS index table

| MCS index $I_{MCS}$ | Modulation order $Q_m$ | Target code rate R x [1024] | Spectral efficiency |
|---|---|---|---|
| 0 | 2 | 30 | 0.0586 |
| 1 | 2 | 40 | 0.0781 |
| 2 | 2 | 50 | 0.0977 |
| 3 | 2 | 64 | 0.1250 |
| 4 | 2 | 78 | 0.1523 |
| 5 | 2 | 99 | 0.1934 |
| 6 | 2 | 120 | 0.2344 |
| 7 | 2 | 157 | 0.3066 |
| 8 | 2 | 193 | 0.3770 |
| 9 | 2 | 251 | 0.4902 |

(continued)

| MCS index $I_{MCS}$ | Modulation order $Q_m$ | Target code rate R x [1024] | Spectral efficiency |
|---|---|---|---|
| 10 | 2 | 308 | 0.6016 |
| 11 | 2 | 379 | 0.7402 |
| 12 | 2 | 449 | 0.8770 |
| 13 | 2 | 526 | 1.0273 |
| 14 | 2 | 602 | 1.1758 |
| 15 | 4 | 340 | 1.3281 |
| 16 | 4 | 378 | 1.4766 |
| 17 | 4 | 434 | 1.6953 |
| 18 | 4 | 490 | 1.9141 |
| 19 | 4 | 553 | 2.1602 |
| 20 | 4 | 616 | 2.4063 |
| 21 | 6 | 438 | 2.5664 |
| 22 | 6 | 466 | 2.7305 |
| 23 | 6 | 517 | 3.0293 |
| 24 | 6 | 567 | 3.3223 |
| 25 | 6 | 616 | 3.6094 |
| 26 | 6 | 666 | 3.9023 |
| 27 | 6 | 719 | 4.2129 |
| 28 | 6 | 772 | 4.5234 |
| 29 | 2 | reserved | |
| 30 | 4 | reserved | |
| 31 | 6 | reserved | |

A direct relationship between a transport block size (TBS) and a time-frequency-domain resource is: the value of the TBS is related to $N_{info} = N_{RE} \cdot R \cdot Q_m \cdot v$, where $N_{RE} = \min(156, N'_{RE}) \cdot n_{PRB}$, $n_{PRB}$ is the number of allocated physical resource blocks (PRBs) (that is, frequency-domain resources), $N'_{RE} = N_{sc}^{RB} \cdot N_{symb}^{sh} - N_{DMRS}^{PRB} - N_{oh}^{PRB}$, $N_{sc}^{RB} = 12$ is the number of subcarriers, $N_{symb}^{sh}$ is the number of time-domain symbols allocated for transmission of the PDSCH/PUSCH, $N_{DMRS}^{PRB}$ is the number of REs occupied by a demodulation reference symbol, $N_{oh}^{PRB}$ is a parameter configured by higher layer signaling, the value of the parameter is 6, 12, or 18 (if the parameter is not configured by the higher layer signaling, the value is set to 0), R is an indicated code rate, $Q_m$ is an indicated modulation order, and v is the number of transmission layers.

A code rate supported by an NR system is limited, and it can be learned from the above descriptions that even if the lowest code rate is used to transmit a small volume of data, the time-frequency resources occupied by the PDSCH/PUSCH are not large.

Sensing precision is usually affected by signal bandwidth and signal duration. For example, the larger the signal bandwidth, the higher the sensing precision of ranging, and the longer the signal duration, the higher the sensing precision of speed measurement.

When sensing is performed by using a communication signal, requirements in terms of two aspects need to be simultaneously considered for a resource allocated to the communication signal: I. communication requirements, including a data volume, transmission reliability, a transmission delay, and the like; and II. sensing requirements, where different sensing services have different requirements for the transmission bandwidth and duration of a signal.

If the base station schedules the PDSCH/PUSCH to occupy a large quantity of time-frequency resources (that is, a large bandwidth or multiple symbols) for transmission to meet the sensing requirements, the following problem exists: when the volume of data to be transmitted is small, a transmitting end generates a large transport block (TB) for transmission by filling in redundancy information (dummy bits), causing problems such as reduced system transmission efficiency, the waste of power consumption, and an increased transmission delay.

The "sensing" mentioned in the embodiments of the present disclosure refers to a process of directly or indirectly obtaining sensing information of a target or an environment based on at least one sensing signal such as a sound wave, an electromagnetic wave, or a light wave (including, but not limited to, a laser). For example, sensing information of a sensed target or environment is obtained by sending and receiving a sensing signal and performing measurement or other processing on the sensing signal, to implement, for example, services such as positioning, ranging, speed measurement, angle measurement, target imaging, target detection, target tracking, and target recognition.

In addition, the "sensing" mentioned in the embodiments of the present disclosure may also be replaced with any other term that can indicate a sensing-related meaning, for example, positioning, ranging, speed measurement, angle measurement, target imaging, target detection, target tracking, target recognition, etc.

With reference to FIG. 4, a flowchart of a sensing result acquisition method provided by an embodiment of the present disclosure is illustrated. The method may include at least one of the following operations 410 and 420.

At 410: a first channel is received by a first device. Data subjected to spreading processing by using a first sequence is mapped to the first channel.

Before operation 410, a second device sends the first channel.

In some embodiments, the first device is a sensing receiving device, and is configured to receive the first channel, where the first channel is configured to acquire a sensing result. The second device is a sensing sending device, and is configured to send the first channel.

In some embodiments, the first device is a first terminal device or a first access network device.

In some embodiments, the second device is a second terminal device or a second access network device.

In some embodiments, the first channel includes at least one of the following: a PDSCH, a physical downlink control channel (PDCCH), a PUSCH, and a physical uplink control channel (PUCCH).

For example, if the first device is a first terminal device, and the second device is a second access network device, the first channel is a downlink channel. For example, the first channel may be a PDCCH or a PDSCH.

For example, if the first device is a first access network device, and the second device is a second terminal device, the first channel is an uplink channel. For example, the first channel may be a PUCCH or a PUSCH.

For example, if the first device is a first terminal device, and the second device is a second terminal device, then the first channel is a sidelink channel. For example, the first channel may be a physical sidelink control channel (PSCCH) or a physical sidelink shared channel (PSSCH).

In some embodiments, the data subjected to the spreading processing using the first sequence being mapped to the first channel means that the data is spread by using the first sequence, and the data subjected to the spreading processing is mapped to different code domain resources that are the same as time-frequency-domain resources of the first channel.

In some embodiments, the data subjected to the spreading processing by using the first sequence being mapped to the first channel is equivalent to multiple users being multiplexed on the time-frequency-domain resource occupied by the first channel, and DMRSs of the first channel sent by the multiple users may be of a comb structure, to increase bandwidths or time occupied by the DMRSs. A method for determining the positions of the DMRSs may take into account Table 1 and Table 2.

In some embodiments, performing spreading processing by using the first sequence refers to performing multiplication on the first sequence and the data.

In some embodiments, the data in the first channel is data or information, other than a DMRS, carried in the first channel.

For example, if the first channel is a shared channel, the data in the first channel is data other than a DMRS carried in the first channel. The shared channel includes a PDSCH, a PUSCH, and a PSSCH. Using an example in which the shared channel is a PDSCH, the data in the first channel is downlink data carried in the PDSCH. Using an example in which the shared channel is a PUSCH, the data in the first channel is uplink data carried in the PUSCH. Using an example in which the shared channel is a PSSCH, the data in the first channel is sidelink data carried in the PSSCH.

For example, if the first channel is a control channel, the data in the first channel is control information other than a DMRS carried in the first channel. The control channel includes a PDCCH, a PUCCH, and a PSCCH. Using an example in which the control channel is a PDCCH, the control information in the first channel is downlink control information for example, downlink control information (DCI), carried in the PDCCH. Using an example in which the control channel is a PUCCH, the control information in the first channel is uplink control information, for example, uplink control information (UCI), carried in the PUCCH. Using an example in which the control channel is a PSCCH, the control information in the first channel is sidelink control information, for example, sidelink control information (SCI), carried in the PSCCH.

In some embodiments, the first sequence is determined based on first configuration information.

In some embodiments, the first device receives the first configuration information from the second device, or the first device receives the first configuration information from a third device. The first configuration information is configured to indicate spreading information of the first channel.

In some embodiments, the first configuration information includes at least one of the following: spreading sequence information, sensing trigger information, or spreading mode information.

The spreading sequence information is configured to indicate a spreading sequence used for spreading the data. In some embodiments, the spreading sequence information includes at least one of the following: an identifier or a serial number of a sequence category; an identifier or a serial number of a sequence group; an identifier or a serial number of the first sequence; or a spreading factor.

The spreading sequence used for spreading may be predefined or preconfigured. For example, the third device preconfigures a spreading sequence used for spreading. The third device is a sensing control device, is configured to acquire a sensing result, and acquire information about a sensed object based on the sensing result. In some embodiments, the third device includes at least one of the following: a third terminal device, a third access network device, a core-network network element, a sensing control network element, or a server. For example, if the first device is a first access network device, the first device preconfigures the spreading sequence used for spreading. For example, if the second device is a second access network device, the second device preconfigures a spreading sequence used for spreading.

Because there are different methods for generating a sequence, the sequence may also be classified into different sequence categories. For example, the sequence may be classified into an orthogonal sequence and a quasi-orthogonal sequence. The orthogonal sequence may be classified into wash code and density functional theory (DFT) code, and the quasi-orthogonal sequence may be classified into an m sequence and a Zadoff Chu (ZC) sequence. The identifier of the sequence category is configured to uniquely identify the sequence category. The identifier of the sequence category may be implemented as a serial number of the sequence category, for example, an index of the sequence category; or it may be implemented in another form, for example, an identifier symbol of the sequence category, which is not limited in the present disclosure.

When spreading factors are different in a sequence category, spreading sequences thereof are also different. Therefore, sequences obtained by one spreading factor may be divided into one sequence group. The identifier of the sequence group is configured to distinguish each sequence group in a sequence category to which the sequence group belongs.

Multiple spreading sequences are included in a sequence group. Therefore, if a first sequence is to be determined in one sequence group, an identifier or a serial number of the first sequence is required. The identifier of the sequence is configured to distinguish each sequence in the sequence group to which the sequence belongs.

The sensing trigger information is configured to indicate whether to trigger sensing measurement. In some embodiments, the sensing result is acquired when the sensing measurement is triggered, and whether to trigger the sensing measurement may be explicitly indicated by the sensing trigger information, or may be implicitly indicated by other information, which is not limited in the present disclosure.

In some embodiments, whether to trigger the sensing measurement is explicitly indicated by the sensing trigger information. For example, whether to trigger the sensing measurement may be indicated by using a specific bit. For example, the specific bit is a first value, indicating that the sensing measurement is triggered, or the specific bit is a second value, indicating that no sensing measurement is triggered.

In some embodiments, there may be one specific bit or multiple specific bits, which is not limited in the present disclosure. For example, if there is one specific bit, the first value and the second value may be 0 and 1. For example, if the first value is 0, and the second value is 1, the specific bit being 0 indicates that the sensing measurement is triggered; and the specific bit being 1 indicates that no sensing measurement is triggered. For another example, if there are two specific bits, the first value may be any one of 00, 01, 10, and 11, and the second value is any one of 00, 01, 10, and 11 other than the first value. For example, if the first value is 00, the second value may be any one of 01, 10, and 11. Using an example in which the first value is 00 and the second value is 11, the specific bit being 00 indicates that the sensing measurement is triggered; and the specific bit being 11 indicates that no sensing measurement is triggered.

In some embodiments, if there are multiple specific bits, merely the first value or the second value may be determined. For example, if only the first value is determined, and if the specific bit is the first value, it indicates that the sensing measurement is triggered; and if the specific bit is not the first value, it indicates that no sensing measurement is triggered. For example, if there are two specific bits, and the first value is 00, the specific bit being 00 indicates that the sensing measurement is triggered; and the specific bit not being 00 indicates that no sensing measurement is triggered. For example, when the specific bit is 01, 10, or 11, it indicates that no sensing measurement is triggered. For example, if only the second value is determined, and if the specific bit is the second value, it indicates that no sensing measurement is triggered; and if the specific bit is not the second value, it indicates that the sensing measurement is triggered. For example, if there are two specific bits, and the second value is 11, the specific bit being 11 indicates that no sensing measurement is triggered; and the specific bit not being 11 indicates that the sensing measurement is triggered. For example, when the specific bit is 00, 01, or 10, it indicates that the sensing measurement is triggered.

The spreading mode information is configured to indicate a spreading mode used for spreading the data. In some embodiments, the spreading mode information is any one of the following: time-domain spreading, frequency-domain spreading, or joint time-frequency-domain spreading.

In some embodiments, the spreading factor is related to the spreading mode.

In some embodiments, if the spreading mode is time-domain spreading, the spreading factor is related to the number of symbols occupied by the first channel, and the spreading factor can be exactly divided by the number of symbols occupied by the first channel. There are 14 symbols in one slot. In some cases, the control channel occupies two symbols, and in this case, if the first channel is a shared channel, the first channel can occupy only 12 symbols. Therefore, during the time-domain spreading, a spreading factor needs to be divisible by 12 or 14. For example, when time-domain spreading is adopted, the spreading factor is 2, 3, 4, 6, or 7.

In some embodiments, if the spreading mode is frequency-domain spreading, the spreading factor is related to the number of subcarriers. The number of subcarriers refers to the number of subcarriers in one RB. There are 12 subcarriers in one RB, and the spreading factor can be divided by the number of subcarriers (i.e., 12). For example, when the frequency-domain spreading is adopted, the spreading factor is 2, 3, 4, or 6.

The joint time-frequency-domain spreading refers to spreading performed in both the time-domain and the frequency-domain. In some embodiments, the joint time-frequency-domain spreading may involve performing time-domain spreading first followed by frequency-domain spreading, or performing frequency-domain spreading first followed by time-domain spreading, which is not limited in the present disclosure.

In some embodiments, the first sequence is determined based on dedicated information of the first device.

The dedicated information of the first device is configured to uniquely identify the first device. For example, the dedicated information of the first device is configured to distinguish the first device from another device. For example, if the first device is the first terminal device, the dedicated information of the first device may be UE_ID. For example, the dedicated information of the first device may alternatively be initialization information (for example, a DMRS sequence initialization) of a DMRS sequence of the first device.

In some embodiments, the first sequence is determined based on the first configuration information and the dedicated information of the first device.

For example, the first sequence is determined based on a first spreading factor indicated in the first configuration information and the dedicated information of the first device. For example, the first sequence is determined based on the identifier or the serial number of the sequence category indicated in the first configuration information and the dedicated information of the first device. For example, the first sequence is determined based on the identifier or the serial number of the sequence category group indicated in the first configuration information and the dedicated information of the first device.

Operation 420: a sensing result is acquired by the first device based on the first channel.

The sensing result is configured to identify a sensed object or a measurement environment, for example, to implement services such as positioning, ranging, speed measurement, angle measurement, target imaging, target detection, target tracking, and target recognition.

In some embodiments, the sensing result is determined based on a DMRS in the first channel.

In some embodiments, the sensing result is determined based on the DMRS and a data part in the first channel.

Generally, the DMRS is configured for sensing. Therefore, the first device may determine the sensing result based on the DMRS in the first channel. In some cases, to improve sensing precision, the data in the first channel may also have a sensing capability. Therefore, the first device may determine the sensing result based on the DMRS and the data part in the first channel.

In some embodiments, operation 430 (not shown in FIG. 4) is further included after operation 420.

In operation 430, the first device sends the sensing result to the third device.

The third device is a sensing control device.

In some embodiments, if the first device is both a sensing receiving device and a sensing control device, operation 430 does not need to be executed.

In some embodiments, if the second device is both a sensing sending device and a sensing control device, operation 430 is that the first device sends the sensing result to the second device.

In some embodiments, the third device is another device different from the first device and the second device, and operation 430 is that the first device sends the sensing result to the third device.

In some embodiments, if the first device is both the sensing receiving device and the sensing control device, the method further includes operation 440 (not shown in FIG. 4), in which the first device sends the first configuration information to the second device. Correspondingly, the second device receives the first configuration information, determines the first sequence based on the first configuration information, and spreading the data in the first channel by using the first sequence.

According to the technical solutions provided in the embodiments of the present disclosure, the data is spread and mapped to the first channel for transmission, the spreading sequence increases the code-domain resource occupied by the first channel, which is equivalent to multiplexing multiple users on the same time-frequency-domain resource, avoiding the occupation of large amounts of physical resources while still meeting the sensing requirements for large bandwidth and long duration, thus avoiding the waste of time-frequency-domain resources.

For how to determine the first sequence, the present disclosure provides an exemplary embodiment.

I. The first sequence is determined based on the first configuration information.

The following Tables 4 to 6 show three orthogonal sequence groups, and the following three sequence groups are used as an example for description.

| Table 4: Orthogonal sequence of spreading factor $N_{SF}^{PUCCH,S} = 2$ | |
|---|---|
| $n$ | $w_n$ |
| 0 | [+1 +1] |
| 1 | [+1 -1] |

| Table 5: Orthogonal sequence of spreading factor $N_{SF}^{PUCCH,S} = 4$ | |
|---|---|
| $n$ | $w_n$ |
| 0 | [+1 +1 +1 +1] |
| 1 | [+1 -j -1 +j] |
| 2 | [+1 -1 +1 -1] |
| 3 | [+1 +j -1 -j] |

| Table 6: Orthogonal sequence of spreading factor $N_{SF}^{PUCCH,2} = 4$ | |
|---|---|
| $n$ | $w_n(i)$ |
| 0 | [+1 +1 +1 +1] |
| 1 | [+1 -1 +1 -1] |
| 2 | [+1 +1 -1 -1] |
| 3 | [+1 -1 -1 +1] |

As shown in Tables 4 and 5, the two sequence groups have the same sequence category but different spreading factors. As shown in Tables 5 and 6, the two sequence groups have different sequence categories but the same spreading factor.

In an example, in a spreading sequence used for spreading, there are no two sequence groups with the same spreading factor. In this case, the first configuration information does not need to indicate an identifier or a serial number of the sequence category.

For example, in the spreading sequence used for spreading, only one sequence category is included, for example, only the sequence category formed by the sequence groups in Table 4 and Table 5 is included, and an identifier or a serial number of the sequence category does not need to be indicated.

For example, in the spreading sequence used for spreading, one spreading factor corresponds to only one sequence group, for example, only Table 4 and Table 6 are included, and an identifier or a serial number of the sequence category does not need to be indicated.

In another example, in the spreading sequence used for spreading, there are no two sequence groups with the same spreading factor. In this case, the spreading factor may be used to replace the identifier or the serial number of the sequence group. In a possible case, the spreading factor is used as the identifier of the sequence group. In another possible case, the first configuration information does not indicate the identifier or the serial number of the sequence group, but indicates the spreading factor.

For example, in the spreading sequence used for spreading, only one sequence category is included, for example, only the sequence category formed by the sequence groups in Table 4 and Table 5 is included, and a corresponding sequence group may be determined based on the spreading factor.

**EP 4 753 159 A1**

For example, in the spreading sequence used for spreading, one spreading factor corresponds to only one sequence group, for example, only Table 4 and Table 6 are included, and a corresponding sequence group may be determined based on the spreading factor.

In another example, in the spreading sequence used for spreading, only one sequence group is included, for example, only one sequence group in Tables 4 to 6 is included. In this case, the first sequence can be determined by indicating only the identifier or the serial number of the first sequence in the first configuration information.

For example, in the spreading sequence used for spreading, only the sequence group shown in Table 4 is included. If the first configuration information indicates that the identifier of the first sequence is 0, the first sequence may be determined as [+1 +1]; and if the first configuration information indicates that the identifier of the first sequence is 1, the first sequence may be determined as [+1 -1].

For example, in the spreading sequence used for spreading, only the sequence group shown in Table 5 is included. If the first configuration information indicates that the identifier of the first sequence is 0, the first sequence may be determined as [+1 +1 +1 +1]; if the first configuration information indicates that the identifier of the first sequence is 1, the first sequence may be determined as [+1 -$j$ -1 +$j$]; if the first configuration information indicates that the identifier of the first sequence is 2, the first sequence may be determined as [+1 -1 +1 -1]; and if the first configuration information indicates that the identifier of the first sequence is 3, the first sequence may be determined as [+1 +$j$ -1 -$j$].

For example, in the spreading sequence used for spreading, only the sequence group shown in Table 6 is included. If the first configuration information indicates that the identifier of the first sequence is 0, the first sequence may be determined as [+1 +1 +1 +1]; if the first configuration information indicates that the identifier of the first sequence is 1, the first sequence may be determined as [+1 -1 +1 -1]; if the first configuration information indicates that the identifier of the first sequence is 2, the first sequence may be determined as [+1 +1 -1 -1]; and if the first configuration information indicates that the identifier of the first sequence is 3, the first sequence may be determined as [+1 -1 -1 +1].

In another example, in the spreading sequence used for spreading, multiple sequence categories are included, and there is a sequence group with the same spreading factor but different sequence categories. In this case, the first configuration information needs to indicate the identifier or the serial number of the sequence category, the identifier or the serial number of the sequence group, and the identifier or the number of the first sequence.

In another example, different sequence groups have different sequence identifiers or serial numbers, for example, Tables 4 to 6 have their own identifiers or serial numbers. Therefore, the first configuration information does not need to indicate the identifier or the serial number of the sequence category.

II. The first sequence is determined based on the dedicated information of the first device.

For example, if it is predefined or preconfigured that the first sequence is determined based on the dedicated information of the first device, and a correspondence between the dedicated information of the first device and the first sequence is predefined or preconfigured, then the first device may determine the first sequence based on the dedicated information of the first device.

For example, correspondences between different UE_IDs and different sequence are preconfigured, and therefore, the first sequence may be determined based on UE_ID of the first device.

For example, correspondences between different DMRS sequence initializations and different sequences are preconfigured, and therefore, the first sequence may be determined based on the DMRS sequence initialization of the first device.

III. The first sequence is determined based on the first configuration information and the dedicated information of the first device.

1. The first sequence is determined based on the dedicated information of the first device and the first spreading factor, where the first spreading factor is determined based on the first configuration information.

In some embodiments, a correspondence among the dedicated information of the first device, the first spreading factor, and the first sequence may be predefined or preconfigured.

For example, the identifier or the serial number of the first sequence is obtained after the first operation is performed on the predefined or preconfigured dedicated information of the first device and the first spreading factor. For example, the identifier or the number of the first sequence is obtained by performing operation on the following predefined or preconfigured identifier or serial number of the first sequence: UE_ID mod $N_{SF}$ or DMRS sequence initialization mod $N_{SF}$, where mod refers to the modulo operation.

In some embodiments, a correspondence between the dedicated information of the first device and the identifier

**12**

or the serial number of the first sequence may be predefined or preconfigured, and the sequence group to which the first sequence belongs is determined based on the first spreading factor, to determine the first sequence.

2. The first sequence is determined in a first sequence group based on the dedicated information of the first device, where the first sequence group is determined based on the first configuration information.

In some embodiments, the first configuration information may indicate an identifier or a serial number of the first sequence group to determine the first sequence group.

In some embodiments, a correspondence between the dedicated information of the first device and the identifier or the serial number of the first sequence may be predefined or preconfigured, and then the first sequence is determined in the first sequence group.

3. The first sequence is determined in a first-type sequence based on the dedicated information of the first device, where the first-type sequence is determined based on the first configuration information.

In some embodiments, the first configuration information may indicate an identifier or a serial number of the first-type sequence to determine the first-type sequence.

In some embodiments, a correspondence among the dedicated information of the first device, the identifier or the serial number of the first sequence, and the first spreading factor may be predefined or preconfigured, and then the first sequence is determined from the first-type sequence.

The foregoing methods for determining the first sequence further need to be specifically analyzed based on the spreading sequence used for spreading. Only several possible cases are discussed above, the foregoing cases may alternatively be combined, and a method obtained through combination shall also fall within the protection scope of the embodiments of the present disclosure, which is not listed one by one herein.

The present disclosure further provides an embodiment of a method for determining a TBS carried on a first channel.

In some embodiments, the first device determines, based on a first parameter, the TBS carried on the first channel, where the first parameter is related to a spreading factor used for spreading the data.

For example, the first parameter may be determined by using the following process:

$$N_{info} = N_{RE} \cdot R \cdot Q_m \cdot v / N_{SF}$$

$N_{SF}$ is a spreading factor, or $N_{SF} = N_{SF\_f} \cdot N_{SF\_t}$, $N_{SF\_f}$ is a frequency-domain spreading factor, $N_{SF\_t}$ is a time-domain spreading factor, $N_{into}$ is a first parameter, R is an indicated code rate, $Q_m$ is an indicated modulation order, and $v$ is the number of transmission layers.

For example, the first parameter may be determined by using the following process:

$$N_{RE} = min(156, N'_{RE}) \cdot n_{PRB} / N_{SF}$$

$N_{SF}$ is the spreading factor, or $N_{SF} = N_{SF\_f} \cdot N_{SF\_t}$, $N_{SF\_f}$ is a frequency-domain spreading factor, $N_{SF\_t}$ is a time-domain spreading factor, $n_{PRB}$ is the number of allocated physical resource blocks (PRBs) (that is, frequency-domain resources), and $N_{RE}$ is a first parameter.

$$N'_{RE} = N_{sc}^{RB} \cdot N_{symb}^{sh} - N_{DMRS}^{PRB} - N_{oh}^{PRB}$$

$N_{sc}^{RB} = 12/N_{SF}$ is the number of subcarriers. $N_{SF}$ is a spreading factor or a frequency-domain spreading factor. $N_{symb}^{sh}/N_{SF}$ is the number of time-domain symbols allocated for transmitting the PDSCH. $N_{SF}$ is a spreading factor or a time-domain spreading factor. $N_{DMRS}^{PRB}$ is the number of REs occupied by a demodulation reference symbol. $N_{oh}^{PRB}$ is a parameter configured by higher layer signaling, the value of the parameter is 6, 12, or 18 (if not configured by the higher layer signaling, the value is set to 0). $N'_{RE}$ is the first parameter.

The foregoing method for calculating the TBS carried on the first channel is designed based on the spreading method provided in this embodiment of the present disclosure. The TBS carried on the first channel can be accurately calculated with reference to the spreading method provided in this embodiment of the present disclosure.

For the method mentioned above, whether to trigger the sensing measurement may be implicitly indicated by other information, and the present disclosure also provides exemplary embodiments.

In some embodiments, the first configuration information includes at least one of the following: spreading sequence information; sensing trigger information; or spreading mode information.

If whether to trigger the sensing measurement may be implicitly indicated by other information, the first configuration information includes at least one of the following: sensing trigger information or spreading mode information.

In some embodiments, when the spreading sequence information and/or the spreading mode information is a first predetermined value, the sensing measurement is triggered.

In some embodiments, when the spreading sequence information and/or the spreading mode information is a second predetermined value, no sensing measurement is triggered.

It should be noted that the first predetermined value (the second predetermined value) does not specifically refer to a certain predetermined value, or may be a type of predetermined values, including multiple predetermined values, or may be a type of predetermined identifiers, which are only referred to as the predetermined value herein, and does not exclude that the first predetermined value may also have other names. The foregoing content is exemplarily described next.

1. The sensing measurement is triggered when the spreading sequence information is the first predetermined value.

The spreading sequence information includes at least one of: an identifier or a serial number of a sequence category; an identifier or a serial number of a sequence group; an identifier or a serial number of the first sequence; or a spreading factor.

For example, the first predetermined value may be an identifier or a serial number of a sequence category included in a spreading sequence used for spreading. If the spreading sequence information indicates an identifier or a serial number of any sequence category, the sensing measurement is triggered. For example, if the spreading sequence used for spreading includes sequence category 1 and sequence category 2, the first predetermined value may be sequence category 1 or sequence category 2. If the spreading sequence information indicates any one of sequence category 1 and sequence category 2, the sensing measurement is triggered.

For example, the first predetermined value may be an identifier or a serial number of a sequence group included in a spreading sequence used for spreading. If the spreading sequence information indicates an identifier or a serial number of any sequence group, the sensing measurement is triggered. For example, if the spreading sequence used for spreading includes sequence group 1 and sequence group 2, the first predetermined value may be sequence group 1 or sequence group 2. If the spreading sequence information indicates any one of sequence group 1 and sequence group 2, the sensing measurement is triggered.

For example, the first predetermined value may be an identifier or a serial number of a sequence included in a spreading sequence used for spreading. If the spreading sequence information indicates an identifier or a serial number of any sequence, the sensing measurement is triggered. For example, if the spreading sequence used for spreading includes sequence 1 and sequence 2, the first predetermined value may be sequence 1 or sequence 2. If the spreading sequence information indicates any one of sequence 1 and sequence 2, the sensing measurement is triggered.

For example, the first predetermined value may be a possible value of the spreading factor. If the spreading factor is any one of possible values, the sensing measurement is triggered. For example, the possible values of the spreading factor are 2, 3, 4, and 6. If the spreading factor is 2, the sensing measurement is triggered.

In some embodiments, no sensing measurement is triggered when the spreading sequence information is not the first predetermined value.

2. The sensing measurement is triggered when the spreading mode information is the first predetermined value.

In some embodiments, the spreading mode information is any one of the following: time-domain spreading, frequency-domain spreading, or joint time-frequency-domain spreading.

In some embodiments, the first predetermined value may be time-domain spreading, frequency-domain spreading, or joint time-frequency-domain spreading. If the spreading mode information indicates any one of time-domain spreading, frequency-domain spreading, or joint time-frequency-domain spreading, the sensing measurement is triggered. For example, if the spreading mode information indicates time-domain spreading, the sensing measurement is triggered.

In some embodiments, no sensing measurement is triggered when the spreading mode information is not the first predetermined value.

3. No sensing measurement is triggered when the spreading sequence information is the second predetermined value.

For example, the first predetermined value may be an identifier or a serial number of a sequence category that is not included in the spreading sequence used for spreading. For example, the spreading sequence used for spreading includes sequence category 1 and sequence category 2, and the second predetermined value may be an identifier or a serial number of any sequence category other than sequence category 1 and sequence category 2. For example, if the spreading sequence information indicates sequence category 3, no sensing measurement is triggered.

For example, the first predetermined value may be an identifier or a serial number of a sequence group that is not included in the spreading sequence used for spreading. For example, the spreading sequence used for spreading includes sequence group 1 and sequence group 2, and the second predetermined value may be an identifier or a serial number of any sequence group other than sequence group 1 or sequence group 2. For example, if the spreading sequence information indicates sequence group 3, no sensing measurement is triggered.

For example, the second predetermined value may be an identifier or a serial number of a sequence that is not included in the spreading sequence used for spreading. For example, the spreading sequence used for spreading includes sequence 1 and sequence 2, and the second predetermined value may be an identifier or a serial number of any sequence other than sequence 1 or sequence 2. If the spreading sequence information indicates sequence 0, no sensing measurement is triggered.

In some embodiments, the sensing measurement is triggered when the spreading sequence information is not the second predetermined value.

4. No sensing measurement is triggered when the spreading mode information is the second predetermined value.

In some embodiments, the spreading mode information is any one of the following: time-domain spreading, frequency-domain spreading, or joint time-frequency-domain spreading.

In some embodiments, the second predetermined value may be any content other than time-domain spreading, frequency-domain spreading, and joint time-frequency-domain spreading. The content may be a value, an identifier, or a null packet, which is not limited in the present disclosure. For example, if the spreading mode information indicates null, no sensing measurement is triggered.

In some embodiments, the sensing measurement is triggered when the spreading mode information is not the second predetermined value.

The foregoing methods may be combined arbitrarily to obtain a new method, which is not described in the present disclosure.

According to the foregoing method, whether to trigger sensing measurement may be flexibly indicated, and there is no need to set additional sensing measurement information, thus reducing the volume of data that needs to be transmitted by using the first configuration information.

In some embodiments, the DMRS in the first channel may also be spread. The DMRS may be spread by using the first sequence, or not using the first sequence, which is not limited in the present disclosure.

1. Spreading the DMRS in the first channel by using the first sequence.

The DMRS in the first channel is spread by using the first sequence. In this case, the DMRS in the first channel subjected to spreading processing is mapped to the first channel. The DMRS in the first channel may be mapped to the first channel in a comb form, to expand a frequency-domain resource or a time-domain resource occupied by the DMRS.

2. The DMRS in the first channel is spread by using the second sequence.

In some embodiments, a spreading factor corresponding to the second sequence is less than or equal to a spreading factor corresponding to the first sequence.

In some embodiments, the spreading factor corresponding to the second sequence is equal to the spreading factor corresponding to the first sequence, but the second sequence is different from the first sequence.

In some embodiments, the spreading factor corresponding to the second sequence may alternatively be greater than the spreading factor corresponding to the first sequence, which is not limited in the present disclosure.

In some embodiments, the second sequence used for DMRS spreading may also be determined by using the same method as the first sequence. Related information of the second sequence may alternatively be indicated by the first configuration information, which is not described in the present disclosure.

According to the foregoing method, the DMRS is spread, so that the DMRS can occupy a larger time-domain resource and/or frequency-domain resource, thereby meeting the sensing requirements for large bandwidth and long duration, thus improving sensing precision.

The following are apparatus embodiments of the present disclosure that may be configured to execute the method embodiments of the present disclosure. For details not disclosed in the apparatus embodiments of the present disclosure, reference may be made to the method embodiments of the present disclosure.

With reference to FIG. 5, a block diagram of a sensing result acquisition apparatus provided by an embodiment of the present disclosure is shown. The apparatus has functions of implementing the foregoing sensing result acquisition method, and the functions may be implemented by hardware, or may be implemented by hardware executing corresponding software. The apparatus may be the first device described above, or may be disposed in the first device. As shown in FIG. 5, the apparatus 500 may include: a transceiver module 510 and a processing module 520.

The transceiver module 510 is configured to receive a first channel, where data subjected to spreading processing by using a first sequence is mapped to the first channel.

The processing module 520 is configured to acquire a sensing result based on the first channel.

EP 4 753 159 A1

In some embodiments, the first sequence is determined based on first configuration information.

Alternatively, the first sequence is determined based on dedicated information of the first device.

Alternatively, the first sequence is determined based on first configuration information and dedicated information of the first device.

In some embodiments, the first configuration information includes at least one of the following: spreading sequence information; sensing trigger information; or spreading mode information.

In some embodiments, the spreading sequence information includes at least one of the following: an identifier or a serial number of a sequence category; an identifier or a serial number of a sequence group; an identifier or a serial number of the first sequence; or a spreading factor.

In some embodiments, the spreading mode information is any one of the following: time-domain spreading, frequency-domain spreading, or joint time-frequency-domain spreading.

In some embodiments, sensing measurement is triggered when the spreading sequence information and/or the spreading mode information are/is a first predetermined value.

Alternatively, no sensing measurement is triggered when the spreading sequence information and/or the spreading mode information are/is a second predetermined value.

In some embodiments, that the first sequence is determined based on the first configuration information and the dedicated information of the first device includes the following operations.

The first sequence is determined based on the dedicated information of the first device and a first spreading factor, where the first spreading factor is determined based on the first configuration information.

Alternatively, the first sequence is determined in a first sequence group based on the dedicated information of the first device, where the first sequence group is determined based on the first configuration information.

Alternatively, the first sequence is determined in a first-type sequence based on the dedicated information of the first device, where the first-type sequence is determined based on the first configuration information.

In some embodiments, when the time-domain spreading is adopted, the spreading factor is 2, 3, 4, 6, or 7.

When the frequency-domain spreading is adopted, the spreading factor is 2, 3, 4, or 6.

In some embodiments, a DMRS in the first channel is spread by using the first sequence.

Alternatively, a DMRS in the first channel is spread by using a second sequence, and a spreading factor corresponding to the second sequence is less than or equal to a spreading factor corresponding to the first sequence.

In some embodiments, the processing module 520 is further configured to determine, based on a first parameter, a TBS carried on the first channel, where the first parameter is related to a spreading factor used for spreading the data.

In some embodiments, the sensing result is determined based on the DMRS on the first channel.

Alternatively, the sensing result is determined based on the DMRS and a data part in the first channel.

In some embodiments, the first channel includes at least one of the following: a PDSCH, a PDCCH, a PUSCH, or a PUCCH.

In some embodiments, the first device is a first terminal device or a first access network device.

In some embodiments, the transceiver module 510 is further configured to send the sensing result to a third device, the third device includes at least one of the following: a third terminal device, a third access network device, a core-network network element, a sensing control network element, or a server.

According to the technical solutions provided in the embodiments of the present disclosure, the data is spread and mapped to the first channel for transmission, the spreading sequence increases the code-domain resource occupied by the first channel, which is equivalent to multiplexing multiple users on the same time-frequency-domain resource, avoiding the occupation of large amounts of physical resources while still meeting the sensing requirements for large bandwidth and long duration, thus avoiding the waste of time-frequency-domain resources.

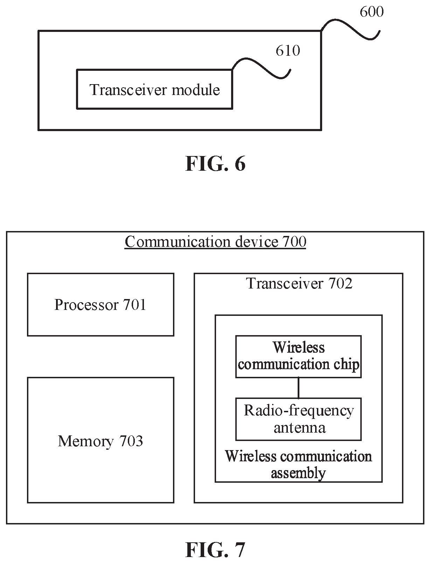

With reference to FIG. 6, a block diagram of a sensing result acquisition apparatus provided by another embodiment of the present disclosure is shown. The apparatus has functions of implementing the foregoing sensing result acquisition method, and the functions may be implemented by hardware, or may be implemented by hardware executing corresponding software. The apparatus may be the second device described above, or may be disposed in the second device. As shown in FIG. 6, the apparatus 600 may include: a transceiver module 610.

The transceiver module 610 is configured to send a first channel, where data subjected to spreading processing by using a first sequence is mapped to the first information, and the first channel is configured to acquire a sensing result.

In some embodiments, the transceiver module 610 is further configured to receive or send first configuration information, where the first configuration information is used for determining the first sequence.

In some embodiments, the first configuration information includes at least one of the following: spreading sequence information; sensing trigger information; or spreading mode information.

In some embodiments, the spreading sequence information includes at least one of the following: an identifier or a serial number of a sequence category; an identifier or a serial number of a sequence group; an identifier or a serial number of the first sequence; or a spreading factor.

In some embodiments, the spreading mode information is any one of the following: time-domain spreading,

16

frequency-domain spreading, or joint time-frequency-domain spreading.

In some embodiments, when the time-domain spreading is adopted, the spreading factor is 2, 3, 4, 6, or 7.

When the frequency-domain spreading is adopted, the spreading factor is 2, 3, 4, or 6.

In some embodiments, a DMRS in the first channel is spread by using the first sequence.

Alternatively, a DMRS in the first channel is spread by using a second sequence, and a spreading factor corresponding to the second sequence is less than or equal to a spreading factor corresponding to the first sequence.

In some embodiments, the sensing result is determined based on the DMRS on the first channel.

Alternatively, the sensing result is determined based on the DMRS and a data part in the first channel.

In some embodiments, the first channel includes at least one of the following: a PDSCH, a PDCCH, a PUSCH, or a PUCCH.

In some embodiments, the second device is a second terminal device or a second access network device.

According to the technical solutions provided in the embodiments of the present disclosure, the data is spread and mapped to the first channel for transmission, the spreading sequence increases the code-domain resource occupied by the first channel, which is equivalent to multiplexing multiple users on the same time-frequency-domain resource, avoiding the occupation of large amounts of physical resources while still meeting the sensing requirements for large bandwidth and long duration, thus avoiding the waste of time-frequency-domain resources.

It should be noted that for the apparatus provided in the above embodiment, when the functions of the apparatus are implemented, the division of the above functional modules is merely used as an example for description. In practical applications, the above functions can be allocated to different functional modules according to actual needs, that is, the content structure of the device is divided into different functional modules to accomplish all or part of the functions described above.

With respect to the apparatus in the above embodiments, the specific manners for executing operations by various modules therein have been described in detail in the embodiments related to the method, which is not be elaborated herein. For details not described in detail in the apparatus embodiments, reference may be made to the foregoing method embodiments.

With reference to FIG. 7, a schematic diagram of a structure of a communication device provided by an embodiment of the present disclosure is illustrated. The communication device may be the foregoing first device, the foregoing second device, or the foregoing third device. The communication device 700 may include a processor 701, a transceiver 702, and a memory 703. The transceiver 702 is configured to implement a sending or receiving function, for example, implement functions of the foregoing transceiver module 510 or the foregoing transceiver module 610, and the processor 701 may be configured to implement another processing function or control sending and/or receiving, for example, implement functions of the processing module 520.

The processor 701 includes one or more processing cores. The processor 701 executes various functional applications and information processing by running software programs and modules.

The transceiver 702 may include a receiver and a transmitter, for example, the receiver and the transmitter may be implemented as the same wireless communication component, and the wireless communication component may include a wireless communication chip and a radio frequency antenna.

The memory 703 may be connected to the processor 701 and the transceiver 702.

The memory 703 may be configured to store a computer program that is executed by the processor, and the processor 701 is configured to execute the computer program to implement each step in the above method embodiments.

In an exemplary embodiment, when the communication device is a first device, the transceiver 702 is configured to receive a first channel, where data subjected to spreading processing by using a first sequence is mapped to the first channel. The processor 701 is configured to acquire a sensing result based on the first channel.

In an exemplary embodiment, when the communication device is a second device, the transceiver 702 is configured to send a first channel, where data subjected to spreading processing by using a first sequence is mapped to the first information, and the first channel is configured to acquire a sensing result.

For details not described in detail in this embodiment, reference may be made to the foregoing embodiments. Details are not described herein.

In addition, the memory may be implemented by any type of volatile or non-volatile storage device or a combination thereof. The volatile or non-volatile storage device includes but is not limited to: a magnetic or optical disk, an electrically erasable programmable read-only memory, an erasable programmable read-only memory, a static random-access memory, a read-only memory, a magnetic memory, a flash memory, or a programmable read-only memory.

An embodiment of the present disclosure provides a computer-readable storage medium. The storage medium has a computer program stored thereon. The computer program is configured to be executed by a processor to implement the sensing result acquisition method on the foregoing first device side, or to implement the sensing result acquisition method on the foregoing second device side. In some embodiments, the computer-readable storage medium may include a read-only memory (ROM), a random-access memory (RAM), a solid state drive (SSD), an optical disc, or the like. The random-access memory may include a resistance random-access memory (ReRAM) and a dynamic random-access memory (DRAM).

An embodiment of the present disclosure further provides a chip. The chip includes a programmable logic circuit and/or program instructions. When the chip runs, the chip is configured to implement the sensing result acquisition method on the foregoing first device side, or to implement the sensing result acquisition method on the foregoing second device side.

An embodiment of the present disclosure further provides a computer program product. The computer program product includes a computer program. The computer program is stored in a computer-readable storage medium. A processor reads the computer program from the computer-readable storage medium and executes the computer program, to implement the sensing result acquisition method on the foregoing first device side, or to implement the sensing result acquisition method on the foregoing second device side.

It should be understood that "indicating" mentioned in the embodiments of the present disclosure may be a direct indication or an indirect indication, or may also represent an association. For example, A indicating B may mean that A directly indicates B, for example, B may be acquired from A; it may also mean that A indirectly indicates B, for example, A indicates C, and B may be acquired from C; it may also mean that there is an association between A and B.

In the description of the embodiments of the present disclosure, the term "corresponding" may represent that there is a direct correspondence or indirect correspondence between two objects, or may represent an association therebetween, or may be the relationship between indicating and being indicated and configuring and being configured, etc.

In some embodiments of the present disclosure, "predefined" may be implemented by pre-storing corresponding code, tables, or other means available for indicating relevant information in a device (e.g., including a terminal device and a network device), and the present disclosure does not limit the specific implementation of the present disclosure. For example, "predefined" may refer to being defined in a protocol.

In some embodiments of the present disclosure, the "protocol" may refer to a standard protocol in the field of communications, for example, it may include an LTE protocol, an NR protocol, and related protocols applied to future communication systems, and the present disclosure is not limited thereto.

The term "multiple" mentioned in the specification refers to two or more. "And/or" describes the associations between associated objects, indicating that there can be three kinds of relationships. For example, A and/or B, which may indicate three situations in which A exists alone, A and B exist simultaneously, or B exists alone. The character "/" generally indicates that the associated objects before and after this character are in an "or" relationship.

The "greater than or equal to" mentioned in the specification may mean greater than or equal to, or greater than, and the "less than or equal to" may mean less than or equal to, or less than.

In addition, the operation numbers described in this specification merely exemplarily show a possible execution sequence of the operations. In some other embodiments, the operations may not be executed according to the number sequence. For example, two operations with different numbers may be executed simultaneously, or two operations with different numbers may be executed according to a sequence contrary to the sequence shown in the figure. This is not limited in embodiments of the present disclosure.

A person skilled in the art should be aware that in the foregoing one or multiple examples, functions described in the embodiments of the present disclosure may be implemented by hardware, software, firmware, or any combination thereof. When the functions are implemented by using software, the functions may be stored in a computer-readable medium or transmitted as one or multiple instructions or code in a computer-readable medium. The computer-readable medium includes a computer storage medium and a communication medium. The communication medium includes any medium that enables a computer program to be transmitted from one place to another. The storage medium may be any available medium accessible to a general-purpose or a dedicated computer.

The above are only exemplary embodiments of the present disclosure and are not intended to limit the present disclosure. Any modifications, equivalent substitutions, improvements, and the like made within the spirit and principles of the present disclosure shall be encompassed within the scope of protection of the present disclosure.

## Claims

1. A sensing result acquisition method, wherein the method is performed by a first device, and the method comprises:

   receiving a first channel, wherein data subjected to spreading processing by using a first sequence is mapped to the first channel; and
   acquiring a sensing result based on the first channel.

2. The method of claim 1, wherein

the first sequence is determined based on first configuration information; or
the first sequence is determined based on dedicated information of the first device; or
the first sequence is determined based on first configuration information and dedicated information of the first device.

3. The method of claim 2, wherein the first configuration information comprises at least one of the following:

spreading sequence information;
sensing trigger information; or
spreading mode information.

4. The method of claim 3, wherein the spreading sequence information comprises at least one of the following:

an identifier or a serial number of a sequence category;
an identifier or a serial number of a sequence group;
an identifier or a serial number of the first sequence; or
a spreading factor.

5. The method of claim 3 or 4, wherein the spreading mode information is any one of the following: time-domain spreading, frequency-domain spreading, or joint time-frequency-domain spreading.

6. The method of any one of claims 3 to 5, wherein

sensing measurement is triggered when the spreading sequence information and/or the spreading mode information is a first predetermined value; or
no sensing measurement is triggered when the spreading sequence information and/or the spreading mode information is a second predetermined value.

7. The method of any one of claims 2 to 6, wherein the first sequence being determined based on the first configuration information and the dedicated information of the first device comprises:

the first sequence is determined based on the dedicated information of the first device and a first spreading factor, wherein the first spreading factor is determined based on the first configuration information; or
the first sequence is determined in a first sequence group based on the dedicated information of the first device, wherein the first sequence group is determined based on the first configuration information; or
the first sequence is determined in a first-type sequence based on the dedicated information of the first device, wherein the first-type sequence is determined based on the first configuration information.

8. The method of any one of claims 1 to 7, wherein

when time-domain spreading is adopted, a spreading factor is 2, 3, 4, 6, or 7; and
when frequency-domain spreading is adopted, the spreading factor is 2, 3, 4, or 6.

9. The method of any one of claims 1 to 8, wherein

a demodulation reference symbol (DMRS) in the first channel is spread by using the first sequence; or,
a DMRS in the first channel is spread by using a second sequence, and a spreading factor corresponding to the second sequence is less than or equal to a spreading factor corresponding to the first sequence.

10. The method of any one of claims 1 to 9, further comprising:
determining, based on a first parameter, a transport block size (TBS) carried on the first channel, wherein the first parameter is related to a spreading factor used for spreading the data.

11. The method of any one of claims 1 to 10, wherein

the sensing result is determined based on a DMRS in the first channel; or
the sensing result is determined based on a DMRS and a data part in the first channel.

12. The method of any one of claims 1 to 11, wherein the first channel comprises at least one of the following: a physical downlink shared channel (PDSCH), a physical downlink control channel (PDCCH), a physical uplink shared channel (PUSCH), or a physical uplink control channel (PUCCH).

13. The method of any one of claims 1 to 12, wherein the first device is a first terminal device or a first access network device.

14. The method of any one of claims 1 to 13, further comprising:
sending the sensing result to a third device, wherein the third device comprises at least one of the following: a third terminal device, a third access network device, a core-network network element, a sensing control network element, or a server.

15. A sensing result acquisition method, wherein the method is performed by a second device, and the method comprises:
sending a first channel, wherein data subjected to spreading processing by using a first sequence is mapped to the first information, and the first channel is configured to acquire a sensing result.

16. The method of claim 15, further comprising:
receiving or sending first configuration information, wherein the first configuration information is configured to determine the first sequence.

17. The method of claims 16, wherein the first configuration information comprises at least one of the following:

   spreading sequence information;
   sensing trigger information; or
   spreading mode information.

18. The method of claim 17, wherein the spreading sequence information comprises at least one of the following:

   an identifier or a serial number of a sequence category;
   an identifier or a serial number of a sequence group;
   an identifier or a serial number of the first sequence; or
   a spreading factor.

19. The method of claim 17 or 18, wherein the spreading mode information is any one of the following: time-domain spreading, frequency-domain spreading, or joint time-frequency-domain spreading.

20. The method of any one of claims 15 to 19, wherein

   when time-domain spreading is adopted, a spreading factor is 2, 3, 4, 6, or 7; and
   when frequency-domain spreading is adopted, the spreading factor is 2, 3, 4, or 6.

21. The method of any one of claims 15 to 20, wherein

   a demodulation reference symbol (DMRS) in the first channel is spread by using the first sequence;
   or,
   a DMRS in the first channel is spread by using a second sequence, and a spreading factor corresponding to the second sequence is less than or equal to a spreading factor corresponding to the first sequence.

22. The method of any one of claims 15 to 21, wherein

   the sensing result is determined based on a DMRS in the first channel; or
   the sensing result is determined based on a DMRS and a data part in the first channel.

23. The method of any one of claims 15 to 22, wherein the first channel comprises at least one of the following: a physical downlink shared channel (PDSCH), a physical downlink control channel (PDCCH), a physical uplink shared channel (PUSCH), or a physical uplink control channel (PUCCH).

24. The method of any one of claims 15 to 23, wherein the second device is a second terminal device or a second access network device.

**25.** A sensing result acquisition apparatus, wherein the apparatus is disposed in a first device, and the apparatus comprises:

a transceiver module, configured to receive a first channel, wherein data subjected to spreading processing by using a first sequence is mapped to the first channel; and
a processing module, configured to acquire a sensing result based on the first channel.

**26.** The apparatus of claim 25, wherein

the first sequence is determined based on first configuration information; or
the first sequence is determined based on dedicated information of the first device; or
the first sequence is determined based on first configuration information and dedicated information of the first device.

**27.** The apparatus of claim 26, wherein the first configuration information comprises at least one of the following:

spreading sequence information;
sensing trigger information; or
spreading mode information.

**28.** The apparatus of claim 27, wherein the spreading sequence information comprises at least one of the following:

an identifier or a serial number of a sequence category;
an identifier or a serial number of a sequence group;
an identifier or a serial number of the first sequence; or
a spreading factor.

**29.** The apparatus of claim 27 or 28, wherein the spreading mode information is any one of the following: time-domain spreading, frequency-domain spreading, or joint time-frequency-domain spreading.

**30.** The apparatus of any one of claims 27 to 29, wherein

sensing measurement is triggered when the spreading sequence information and/or the spreading mode information is a first predetermined value; or
no sensing measurement is triggered when the spreading sequence information and/or the spreading mode information is a second predetermined value.

**31.** The apparatus of any one of claims 26 to 30, wherein the first sequence being determined based on the first configuration information and the dedicated information of the first device comprises:

the first sequence is determined based on the dedicated information of the first device and a first spreading factor, wherein the first spreading factor is determined based on the first configuration information; or
the first sequence is determined in a first sequence group based on the dedicated information of the first device, wherein the first sequence group is determined based on the first configuration information; or
the first sequence is determined in a first-type sequence based on the dedicated information of the first device, wherein the first-type sequence is determined based on the first configuration information.

**32.** The apparatus of any one of claims 25 to 31, wherein

when time-domain spreading is adopted, a spreading factor is 2, 3, 4, 6, or 7; and
when frequency-domain spreading is adopted, the spreading factor is 2, 3, 4, or 6.

**33.** The apparatus of any one of claims 25 to 32, wherein

a demodulation reference symbol (DMRS) in the first channel is spread by using the first sequence;
or,

a DMRS in the first channel is spread by using a second sequence, and a spreading factor corresponding to the second sequence is less than or equal to a spreading factor corresponding to the first sequence.

34. The apparatus of any one of claims 25 to 33, wherein the processing module is further configured to determine, based on a first parameter, a transport block size (TBS) carried on the first channel, the first parameter being related to a spreading factor used for spreading the data.

35. The apparatus of any one of claims 25 to 34, wherein

the sensing result is determined based on a DMRS in the first channel; or
the sensing result is determined based on a DMRS and a data part in the first channel.

36. The apparatus of any one of claims 25 to 35, wherein the first channel comprises at least one of the following: a physical downlink shared channel (PDSCH), a physical downlink control channel (PDCCH), a physical uplink shared channel (PUSCH), or a physical uplink control channel (PUCCH).

37. The apparatus of any one of claims 25 to 36, wherein the first device is a first terminal device or a first access network device.

38. The apparatus of any one of claims 25 to 37, wherein the transceiver module is further configured to send the sensing result to a third device, the third device comprising at least one of the following: a third terminal device, a third access network device, a core-network network element, a sensing control network element, or a server.

39. A sensing result acquisition apparatus, wherein the apparatus is disposed in a second device, and the apparatus comprises:
a sending module, configured to send a first channel, wherein data subjected to spreading processing by using a first sequence is mapped to the first information, and the first channel is configured to acquire a sensing result.

40. The apparatus of claim 39, further comprising:
a transceiver module, configured to receive or send first configuration information, wherein the first configuration information is configured to determine the first sequence.

41. The apparatus of claim 40, wherein the first configuration information comprises at least one of the following:

spreading sequence information;
sensing trigger information; or
spreading mode information.

42. The apparatus of claim 41, wherein the spreading sequence information comprises at least one of the following:

an identifier or a number of a sequence category;
an identifier or a number of a sequence group;
an identifier or a number of the first sequence; or
a spreading factor.

43. The apparatus of claim 41 or 42, wherein the spreading mode information is any one of the following: time-domain spreading, frequency-domain spreading, or joint time-frequency-domain spreading.

44. The apparatus of any one of claims 39 to 43, wherein

when time-domain spreading is adopted, a spreading factor is 2, 3, 4, 6, or 7; and
when frequency-domain spreading is adopted, the spreading factor is 2, 3, 4, or 6.

45. The apparatus of any one of claims 39 to 44, wherein

a demodulation reference symbol (DMRS) in the first channel is spread by using the first sequence; or,
a DMRS in the first channel is spread by using a second sequence, and a spreading factor corresponding to the second sequence is less than or equal to a spreading factor corresponding to the first sequence.

46. The apparatus of any one of claims 39 to 45, wherein

   the sensing result is determined based on a DMRS in the first channel; or
   the sensing result is determined based on a DMRS and a data part in the first channel.

47. The apparatus of any one of claims 39 to 46, wherein the first channel comprises at least one of the following: a physical downlink shared channel (PDSCH), a physical downlink control channel (PDCCH), a physical uplink shared channel (PUSCH), or a physical uplink control channel (PUCCH).

48. The apparatus of any one of claims 39 to 47, wherein the second device is a second terminal device or a second access network device.

49. A communication device, comprising a processor and a memory, wherein the memory has a computer program stored therein, and the processor executes the computer program to implement the method according to any one of claims 1 to 14 or the method according to any one of claims 15 to 24.

50. A computer-readable storage medium, having a computer program stored thereon, wherein the computer program is configured to be executed by a processor to implement the method according to any one of claims 1 to 14 or the method according to any one of claims 15 to 24.

51. A chip, comprising a programmable logic circuit and/or program instructions, and when the chip runs, the chip is configured to implement the method according to any one of claims 1 to 14 or the method according to any one of claims 15 to 24.

52. A computer program product, comprising computer instructions stored in a computer-readable storage medium, wherein the computer instructions are read and executed by a processor from the computer-readable storage medium to implement the method according to any one of claims 1 to 14 or the method according to any one of claims 15 to 24.

**FIG. 1**

**FIG. 2**

Time domain symbol

Subcarrier

Configuration type 2

⬚ Ports 0 and 1
⬚ Ports 2 and 3
■ Ports 4 and 5

Time domain symbol

Subcarrier

Configuration type 2

⬚ Ports 0, 1, 6, and 7
⬚ Ports 2, 3, 8, and 9
■ Ports 4, 5, 10, and 11

**FIG. 3**

410

Receive, by a first device, a first channel, data subjected to spreading processing by using a first sequence is mapped to the first channel

420

Acquire, by the first device, a sensing result based on the first channel

**FIG. 4**

500

510

Transceiver module

520

Processing module

**FIG. 5**

600

610

Transceiver module

**FIG. 6**

Communication device 700

Processor 701

Transceiver 702

Wireless communication chip

Radio-frequency antenna

Wireless communication assembly

Memory 703

**FIG. 7**

## INTERNATIONAL SEARCH REPORT

| International application No. |
|---|
| **PCT/CN2023/109495** |

| A. | CLASSIFICATION OF SUBJECT MATTER |
|---|---|

H04B 1/69(2011.01)i

According to International Patent Classification (IPC) or to both national classification and IPC

| B. | FIELDS SEARCHED |
|---|---|

Minimum documentation searched (classification system followed by classification symbols)

IPC:H04B

Documentation searched other than minimum documentation to the extent that such documents are included in the fields searched

Electronic data base consulted during the international search (name of data base and, where practicable, search terms used)

DWPI, ENTXT, CNKI, CNTXT: 扩频, 感知, 专属, 编号, 系数, 解调参考信号, 传输块大小, spread, spectrum, number, coefficient, Demodulation Reference Signal, Transport Block Size

| C. | DOCUMENTS CONSIDERED TO BE RELEVANT |
|---|---|

| Category* | Citation of document, with indication, where appropriate, of the relevant passages | Relevant to claim No. |
|---|---|---|
| X | WO 2022036566 A1 (GUANGDONG OPPO MOBILE TELECOMMUNICATIONS CORP., LTD.) 24 February 2022 (2022-02-24)<br>description, page 1, line 5-page 2, line 30, and page 5, line 10-page 6, line 10 | 1-52 |
| X | US 2014341114 A1 (LG ELECTRONICS INC.) 20 November 2014 (2014-11-20)<br>description, paragraphs [0026]-[0094] | 1-52 |
| A | CN 111757367 A (HUAWEI TECHNOLOGIES CO., LTD.) 09 October 2020 (2020-10-09)<br>description, paragraphs [0004]-[0028] | 1-52 |
| A | US 2014307757 A1 (LG ELECTRONICS INC.) 16 October 2014 (2014-10-16)<br>entire document | 1-52 |

☐ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **15 January 2024** | **22 January 2024** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT
### Information on patent family members

International application No.

**PCT/CN2023/109495**

| Patent document cited in search report | | | Publication date (day/month/year) | Patent family member(s) | | | Publication date (day/month/year) |
|---|---|---|---|---|---|---|---|
| WO | 2022036566 | A1 | 24 February 2022 | CN | 115868223 | A | 28 March 2023 |
| US | 2014341114 | A1 | 20 November 2014 | WO | 2013070052 | A1 | 16 May 2013 |
| CN | 111757367 | A | 09 October 2020 | None | | | |
| US | 2014307757 | A1 | 16 October 2014 | WO | 2013070020 | A1 | 16 May 2013 |

Form PCT/ISA/210 (patent family annex) (July 2022)